# EUROPEAN PATENT APPLICATION

(11) **EP 4 686 684 A1**
(43) Date of publication of application: **04.02.2026**
(21) Application number: 25169012.9
(22) Date of filing: 08.04.2025
(51) Int. Cl.: B65H 67/04, B65H 67/06, B65H 54/26

(54) **PERISCOPIC DOFFING DEVICE**

(30) Priority: 02.08.2024 CN 202411057955
(71) Applicant: Zhejiang Hengyi Petrochemical Co., Ltd., Zhejiang 311200 (CN); Jiaxing Yipeng Chemical Fiber Co., Ltd., Jiaxing City, Zhejiang Province 314031 (CN)
(72) Inventor: JIN, Junliang, Hangzhou 311200 (CN); PENG, Xiantao, Hangzhou 311200 (CN); QIU, Yibo, Hangzhou 311200 (CN); CHEN, Jiangang, Hangzhou 311200 (CN); LI, Dake, Hangzhou 311200 (CN); KONG, Rongwei, Hangzhou 311200 (CN); ZHANG, Yaobin, Hangzhou 311200 (CN)
(74) Representative: Bittner, Bernhard

(57) **Abstract**

A periscopic doffer device including: a travelling mechanism (10) including a frame (12); a first lifting mechanism including a first lifting rod group (21) and a first platform (22), the first lifting rod group being fixed on the frame and the top end of the first lifting rod group being connected to the first platform; a second lifting mechanism including a second lifting rod group and a second platform (33), the second lifting rod group being arranged on the first platform and the top end of the second lifting rod group is connected to the second platform; a rotating mechanism including a rotary motor (41) fixed on the second platform and a rotary rack (42), the rotary motor being connected to the rotary table at the bottom of the rotary rack, and a sliding rail assembly is horizontally arranged on the rotary rack; and a yarn receiving mechanism.

## Description

### TECHNICAL FIELD

The present disclosure relates to the technical field of chemical fiber production, and in particular, to a periscopic doffing device.

### BACKGROUND

The process of removing a reel that has completed the winding work from the working position of the winding machine is called doffing, and the reel that has completed the winding is called a yarn spindle. Generally, when a whole yarn spindle is taken out from a winding machine at one time, a receiving rod corresponding to a width of the yarn whole spindle is required to be butted against a winding rod of the winding machine in the same direction. Therefore, the yarn receiving doffing device is too wide in size and a working passage is seriously occupied during working, so that personnel and other material receiving mechanisms cannot pass through the device.

### SUMMARY

Embodiments of the present disclosure provide a periscopic doffing device to solve or alleviate one or more technical problems in the related art.

As an aspect of embodiments of the present disclosure, the embodiments of the present disclosure provide a periscopic doffing device including:
a travelling mechanism including a frame, traveling wheels and a traveling motor, where the travelling mechanism is disposed in a ground groove below the ground, the ground groove is arranged along a first straight line, and the first straight line is parallel to a second straight line formed by a plurality of material receiving stations;
a first lifting mechanism including a first lifting rod group, a first driving motor and a first platform, where the first lifting rod group is fixed on the frame, a top end of the first lifting rod group is connected to the first platform, and the first lifting rod group is driven by the first driving motor to adjust a height of the first platform;
a second lifting mechanism including a second lifting rod group, a second driving motor and a second platform, where the second lifting rod group is arranged on the first platform, a top end of the second lifting rod group is connected to the second platform, and the second lifting rod group is driven by the second driving motor to adjust a height of the second platform;
a rotating mechanism including a rotary motor fixed on the second platform and a rotary rack, where the rotary motor is fixed on the second platform, the rotary motor is connected to a rotary table at a bottom of the rotary rack, a sliding rail assembly is horizontally arranged on the rotary rack, and the rotary rack is driven by the rotary motor to switch an orientation between a first direction and a second direction; and
a yarn receiving mechanism including a yarn receiving rod and a translation assembly, where a first end of the yarn receiving rod is connected to the translation assembly, the translation assembly is connected to the sliding rail assembly, and the yarn receiving rod is driven by the translation assembly to extend and retract along the orientation of the rotary rack, such that a second end of the yarn receiving rod reaches a target material receiving station to receive a material to be transferred.

In a possible implementation, the first lifting rod group includes a plurality of hydraulic lifting rods, bottoms of the plurality of hydraulic lifting rods are fixed to the middle of the frame, and top ends of the plurality of hydraulic lifting rods are uniformly distributed along the edge of the first platform.

In a possible implementation, the second lifting rod group includes a plurality of sets of threaded screws and sliding rods, where the sliding rods are fixedly connected to one of the first platform and the second platform and are slidingly connected to the other; bottoms of the threaded screws penetrate through the first platform and are connected to a second driving motor located under the first platform; and the second driving motor drives the threaded screw to rotate to lift or lower the second platform.

In a possible implementation, a pair of vertical plates are provided on both sides in a length direction of the rotating mechanism, and bottoms of the pair of vertical plates are connected to the rotary table through a bottom plate; and the vertical plate is provided with a slot arranged along the horizontal direction, the sliding rail assembly is fixed to the inner side of the vertical plate below the slot, the translation assembly is arranged between the pair of vertical plates, a translation motor of the translation assembly is connected to the sliding rail assembly, and a sliding block of the translation assembly is connected to a first end of the yarn receiving rod outside the vertical plate through the slot.

In a possible implementation, the sliding rail assembly includes a rack rail and an I-beam rail, the I-beam rail is fixed on the bottom plate, and the rack rail is fixed to an inner side of the vertical plate; and a bottom of the translation motor is connected to the I-beam rail through a wheel, an output end of the translation motor is connected to the rack rail through a gear, and the sliding block is connected to the translation motor.

In a possible implementation, the doffing device further includes:
an auxiliary supporting mechanism including a limiting sleeve, a supporting rod, a switch assembly, a pull rope and a clamping pin, where the limiting sleeve is arranged at a first end of the rotating mechanism, a vertical through-hole is formed in the middle of the limiting sleeve, the supporting rod is movably arranged in the vertical through-hole, the clamping pin is arranged on a side of the vertical through-hole and connected to the switch assembly, the supporting rod is provided with a ratchet that matches with the clamping pin, and the clamping pin is driven by the switch assembly to separate from or engage with the ratchet of the supporting rod; and a first end of the pull rope is connected to a bottom of the supporting rod, and a second end of the pull rope is connected to a power source to lift the support rod.

In a possible implementation, the second end of the pull rope is detachably connected to a hook of the translation assembly through a connecting block, and the connecting block is disposed in a sliding chute parallel to the sliding rail assembly; before the translation assembly extends outwards, the hook is separated from the connecting block, allowing the supporting rod to slide down to the ground under gravity; and in the inward retraction process of the translation assembly, the hook drives the connecting block to move such that the supporting rod is lifted and retracted.

In a possible implementation, when the doffing device moves towards the target material receiving station, the entire doffing device is located in the ground groove; after the doffing device reaches the target material receiving station, the yarn receiving mechanism is lifted from the ground groove and docks with the target material receiving station, driven by the first lifting mechanism, the second lifting mechanism and the rotating mechanism, to receive the material to be transferred; when the doffing device returns from the target material receiving station, at least a portion of the doffing device is located in the ground groove; and when the travelling mechanism of the doffing device moves, the rotary rack is oriented in the first direction parallel to the first straight line.

In a possible implementation, the doffing device, after reaching the target material receiving station, executes the following material receiving operation:
lifting, by the first lifting mechanism and the second lifting mechanism, the yarn receiving mechanism to a height matched with the target material receiving station; rotating, by the rotating mechanism, the rotary rack to the second direction, such that the yarn receiving rod of the yarn receiving mechanism is aligned with the target material receiving station in a direction; and extending, by means of the translation assembly, the second end of the yarn receiving rod along the horizontal direction to reach the target material receiving station, where the second direction is a moving direction of the material to be transferred of the target material receiving station.

In a possible implementation, a first end of the rotary rack is provided with a camera device, and the camera device is configured to determine a position difference between the second end of the yarn receiving rod and the target material receiving station;
the second lifting mechanism is configured to adjust a vertical position of the second end of the yarn receiving rod according to the position difference; and/or
the rotating mechanism is configured to adjust a transverse position of the second end of the yarn receiving rod according to the position difference to realize accurate docking.

By adopting the above technical solution according to the embodiments of the present disclosure, the occupied space of the passage and the ground can be reduced.

The foregoing summary is provided for the purpose of description only and is not intended to be limiting in any way. In addition to the illustrative aspects, embodiments, and features described above, further aspects, embodiments, and features of the present disclosure will be readily apparent by reference to the drawings and the following detailed description.

### BRIEF DESCRIPTION OF THE DRAWINGS

In the drawings, like reference numerals designate like or similar parts or elements throughout the accompanying figures unless otherwise specified. The figures are not necessarily drawn to scale. It should be understood that these figures depict only some of the embodiments in accordance with the present disclosure and are not to be considered limiting of the scope thereof.
FIG. 1 is a schematic structural diagram of a periscopic doffing device according to an embodiment of the present disclosure;
FIG. 2 is a schematic structural diagram of a rotating mechanism of the doffing device in FIG. 1 facing a second direction;
FIG. 3 is a partially enlarged schematic diagram of the rotating mechanism and a yarn receiving mechanism in FIG. 2;
FIG. 4 is a schematic structural diagram of the doffing device in an unloaded submerged state according to an embodiment of the present disclosure; and
FIG. 5 is a schematic structural diagram of the doffing device when fully loaded with materials to be transferred according to an embodiment of the present disclosure.

Description of reference numerals: 10: a travelling mechanism, 11: a travelling wheel, 12: a frame, 21: a first lifting rod group, 22: a first platform, 31: a sliding rod, 32: a threaded screw, 33: a second platform, 34: a second driving motor, 41: a rotary motor, 42: a rotary rack, 421: a vertical plate, 422: a bottom plate, 43: a rotary table, 441: a rack rail, 442: an I-beam rail, 51: a yarn receiving rod, 52: a sliding block, 53: a translation motor, 54: a wheel, 55: a hook, 61: a supporting rod, 62: a limiting sleeve, 63: a switch assembly, 64: a pull rope, 65: a supporting foot, 66: a connecting block, 71: a camera device, and 80: a material to be transferred.

### DETAILED DESCRIPTION

In the following text, only certain exemplary embodiments are briefly described. As those skilled in the art would realize, the described embodiments may be modified in various different ways without departing from the scope of the present disclosure. Consequently, the accompanying figures and description should be considered as being of an exemplary nature rather than restrictive.

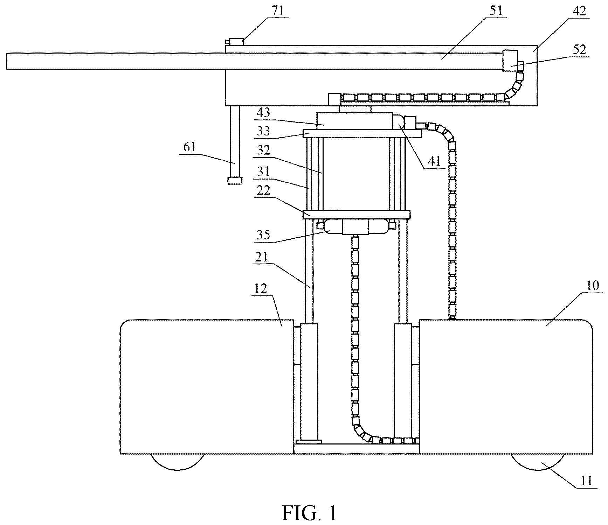

FIG. 1 is a schematic structural diagram of a periscopic doffing device according to an embodiment of the present disclosure. As shown in FIG. 1, the device includes:
a travelling mechanism 10 including a frame 12, traveling wheels 11 and a traveling motor, where the travelling mechanism 10 is disposed in a ground groove below the ground, the ground groove is arranged along a first straight line, and the first straight line is parallel to a second straight line formed by a plurality of material receiving stations;
a first lifting mechanism including a first lifting rod group 21, a first driving motor and a first platform 22, where the first lifting rod group 21 is fixed on the frame 12, a top end of the first lifting rod group 21 is connected to the first platform 22, and the first lifting rod group 21 is driven by the first driving motor to adjust a height of the first platform 22;
a second lifting mechanism including a second lifting rod group, a second driving motor 34 and a second platform 33, where the second lifting rod group is arranged on the first platform 22, a top end of the second lifting rod group is connected to the second platform 33, and the second lifting rod group is driven by the second driving motor 34 to adjust a height of the second platform 33;
a rotating mechanism including a rotary motor 41 fixed on the second platform 33 and a rotary rack 42, where the rotary motor 41 is fixed on the second platform 33, the rotary motor 41 is connected to a rotary table 43 at a bottom of the rotary rack 42, a sliding rail assembly is horizontally arranged on the rotary rack 42, and the rotary rack 42 is driven by the rotary motor 41 to switch an orientation between a first direction and a second direction; and
a yarn receiving mechanism including a yarn receiving rod 51 and a translation assembly, where a first end of the yarn receiving rod 51 is connected to the translation assembly, the translation assembly is connected to the sliding rail assembly, and the material receiving rod 51 is driven by the translation assembly to extend and retract along the orientation of the rotary rack 42, such that a second end of the yarn receiving rod 51 reaches a target material receiving station to receive a material to be transferred.

In the embodiment of the present disclosure, the plurality of material receiving stations correspond to the plurality of winding machines, the plurality of winding machines may be arranged into a plurality of columns with a passage being arranged between two face-to-face columns to allow personnel and equipment to pass through conveniently. When one of the winding machines finishes winding work and needs to take off the yarn spindle formed by winding, the periscopic doffing device can travel in the ground groove like a submarine, and when the winding machine arrives at the target material receiving station corresponding to the winding machine, the yarn receiving mechanism like a periscope is lifted from the ground groove and rotates, and then the yarn receiving mechanism is docked with the target material receiving station. A bottom of the ground groove is provided with a ground rail, and the traveling wheel 11 of the travelling mechanism 10 may be driven by the traveling motor to move on the ground rail. The traveling wheel 11 and the traveling motor are provided on the frame 12. A roof of the ground groove may be provided with a removable cover so that a top surface of a sub-section of the ground groove is closed to allow a person to stand and walk when no doffing device moves through the ground groove.

The first lifting mechanism is fixed on the frame 12 and used for controlling the lifting of the first platform 22. The second lifting mechanism is fixed on the first platform 22 and used for controlling the lifting of the second platform 33. The rotating mechanism is arranged on the second platform 33 and used for controlling the orientation of the rotating mechanism and the yarn receiving mechanism in the horizontal direction. The yarn receiving rod 51 of the yarn receiving mechanism may extend outwards along the orientation of the yarn receiving mechanism under the driving of the translation assembly to reach the target material receiving station, such that the yarn receiving rod 51 and a winding rod of the winding machine are arranged on the same straight line. When the winding machine pushes out a yarn spindle on the winding rod, the yarn receiving rod 51 receives the yarn spindle one by one. The yarn receiving rod 51 has a length that is matched with the winding rod; in other words, the yarn receiving rod 51 can receive all yarn spindles on the winding rod at one time.

It should be noted that, in order to simultaneously pick up all the yarn spindles on the rod, the yarn receiving rod 51 needs to have a sufficient length, which is perpendicular to a longitudinal direction of the passage during doffing, and thus the width of the passage is significantly occupied. After the completion of the pick-up, if the direction of the yarn receiving rod 51 is not adjusted with its movement in a direction perpendicular to the passage direction, it may be difficult to pass through the entire passage, for example, for a scheme of doffing and transferring by using Automatic Guided Vehicle. Therefore, it is necessary to rotate the longitudinal direction of the yarn receiving rod 51 to be aligned with the longitudinal direction of the passage during the movement, thereby reducing the space occupation in the width direction of the passage. In the related technical scheme, a fixed rail, namely a sky rail and a ground rail, is usually arranged on the ground of a passage and/or above the passage. The implementation difficulty of the ground rail is low, but since related components of the winding rod in the winding machine need to be taken out periodically for maintenance and the related components of the winding rod can only be taken out along a straight line in the length direction thereof, the existence of the ground rail may easily hinder the dismounting and maintenance operation of the winding machine.

The first direction may be understood to be a length direction of the passage and also a direction in which the doffing device moves in the passage. The second direction may be understood to be a direction in which the material to be transferred (the yarn spindle) 80 is moved when removed from the winding machine and which is generally perpendicular to the first direction.

It should also be noted that two sets of doffing devices may be disposed in one passage, and each doffing device is responsible for doffing of the winding machines on one side of the passage. Only one set of doffing device may be disposed, which is responsible for doffing of the winding machines on both the left and right sides. That is, to switch from the first direction to the second direction, the rotary rack 42 may be rotated either clockwise or counterclockwise by 90° by the drive of the rotary motor 41, depending on the initial orientation of the rotary rack 42 and the side of the passage where the target receiving station is located.

According to the scheme of the embodiment of the present disclosure, the doffing device can travel in the ground groove and lift from the ground groove when receiving the material 80 to be transferred, so that the space occupied in the passage is reduced.

In a possible implementation, the first lifting rod group 21 includes a plurality of hydraulic lifting rods. The bottoms of the plurality of hydraulic lifting rods are fixed to the middle of the frame 12, and the top ends of the plurality of hydraulic lifting rods are uniformly distributed along the edge of the first platform 22.

In the embodiment of the present disclosure, the first lifting rod group 21 may include four or more hydraulic lifting rods. The first driving motor is connected to an oil pump, and the oil pump is connected to the hydraulic cylinders of the hydraulic lifting rods. A top side surface of the hydraulic cylinder may be connected to the frame 12 to enhance the stability of the rest of components thereon. The first driving motor and the oil pump, not shown in FIG. 1, may be disposed in a housing at the front or rear of the frame 12. The maximum stroke of the first lifting rod group 21 is not less than 50% of a height difference between the lowest position of the yarn receiving mechanism and a height of the material receiving station. Preferably, the maximum stroke of the first lifting rod group 21 is not less than 80% of the height difference between the lowest position of the yarn receiving mechanism and the height of the material receiving station. That is, most of the height stroke is performed by the first lifting mechanism, and a small part of the height stroke is performed by the second lifting mechanism.

According to the scheme of the embodiment of the present disclosure, using the hydraulic lifting rod as a first-stage lifting mechanism can make the lifting action quicker and improve the doffing efficiency.

In a possible implementation, the second lifting rod group includes a plurality of sets of threaded screws 32 and sliding rods 31, where the sliding rods 31 are fixedly connected to one of the first platform 22 and the second platform 33 and are slidably connected to the other; bottoms of the threaded screws 32 penetrate through the first platform 22 and are connected to a second driving motor 34 located under the first platform 22; and the second driving motor 34 drives the threaded screws 32 to rotate to lift or lower the second platform 33.

In the embodiment of the present disclosure, at least four sliding rods 31 are disposed at the four corners of the platform, respectively, and are staggered from the first lifting rod group 21. The top ends of the sliding rods 31 are fixedly connected to the second platform 33, and the rest of them may penetrate through the first platform 22. The length of the sliding rod 31 is not greater than the stroke of the threaded screw 32, and a limit block may be arranged at the bottom of the sliding rod 31. There are at least two threaded screws 32, and the top ends of the threaded screws 32 are connected to the second platform 33 through rotating bearings. That is, there is no relative displacement between the threaded screws 32 and the second platform 33. The threaded screws 32 penetrate through circular holes in the first platform 22 and are connected to an output assembly of the second driving motor 34. The output assembly includes an output shaft and a gear set. The second driving motor 34 drives the threaded screws 32 to rotate, so that the threaded screws 32 have relative displacement with the second driving motor 34 and the first platform 22 to lift or lower the second platform 33 connected to the threaded screws 32.

According to the scheme of the embodiment of the present disclosure, the threaded screws 32 are used as a second-stage lifting mechanism to achieve more accurate height control and facilitate the accurate docking of the yarn receiving rod 51 with the target material receiving station.

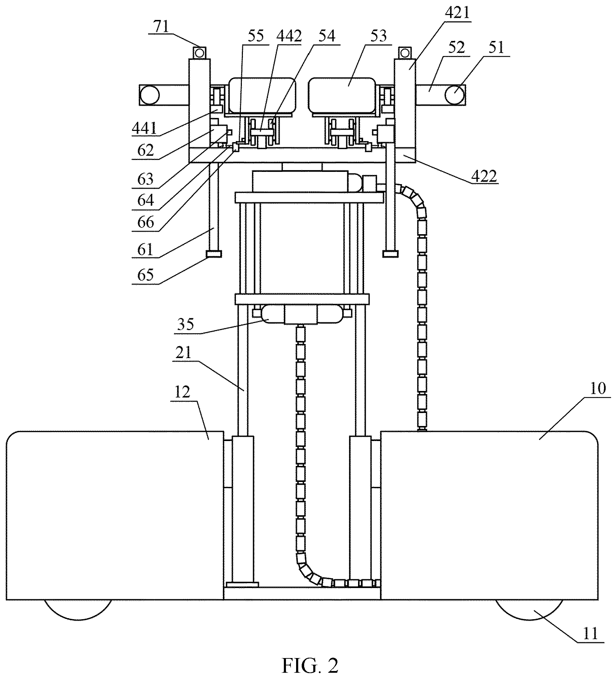

FIG. 2 is a schematic structural diagram of the rotating mechanism of the doffing device in FIG. 1 facing the second direction. Referring to FIG. 2, in a possible implementation, a pair of vertical plates 421 are provided on both sides in a length direction of the rotation mechanism, and bottoms of the pair of vertical plates 421 are connected to the rotary table 43 through a bottom plate 422. The vertical plate 421 is provided with a slot arranged along the horizontal direction. The sliding rail assembly is fixed to the inner side of the vertical plate 421 below the slot. The translation assembly is arranged between the pair of vertical plates 421. A translation motor 53 of the translation assembly is connected to the sliding rail assembly, and a sliding block 52 of the translation assembly is connected to a first end of the yarn receiving rod 51 outside the vertical plate 421 through the slot.

In the embodiment of the present disclosure, the pair of vertical plates 421 and the bottom plate 422 connecting the bottoms of the two vertical plates 421 constitute the rotary rack 42. The vertical plate 421 may have a curvature that is adapted to the material 80 to be transferred. The vertical plates 421 separate the yarn receiving rod 51 and the translation assembly on either side, i.e., the translation assembly is arranged between the pair of vertical plates 421. The translation assembly is connected to the yarn receiving rod 51 through the sliding block 52 that penetrates the vertical plate 421. The vertical plates 421 can be used to separate the material 80 to be transferred, preventing mechanical parts from accidentally polluting and damaging the material.

In a possible implementation, referring to FIG. 2, the sliding rail assembly includes a rack rail 441 and an I-beam rail 442. The I-beam rail 442 is fixed on the bottom plate 422, and the rack rail 441 is fixed to an inner side of the vertical plate 421. A bottom of the translation motor 53 is connected to the I-beam rail 442 through a wheel 54, and an output end of the translation motor 53 is connected to the rack rail 441 through a gear. The sliding block 52 is connected to the translation motor 53.

In an example, the doffing device includes two sets of yarn receiving mechanisms. Correspondingly, two sets of sliding rail assemblies are provided on the rotating mechanism, and the two sets of yarn receiving mechanisms and the sliding rail assemblies are symmetrically arranged. The two sets of yarn receiving mechanisms can receive yarn spindles from different winding machines, thereby improving the transfer efficiency.

In the embodiment of the present disclosure, the translation motor 53 drives the gear to move on the rack rail 441 and the I-beam rail 442. Two wheel seats are symmetrically arranged at the bottom of the translation motor 53. Each wheel seat is provided with upper and lower layers of wheel sets 54, which are connected to the upper and lower sides of the top plane of the I-beam rail 442, respectively, so that the translation motor 53 is fixed in the vertical direction. The rack rail 441 is provided inside the vertical plate 421. After the yarn receiving rod 51 receives all the yarn spindles on the rod, the rack rail 441 also serves as a fulcrum closer to the yarn receiving rod 51 to share part of the weight.

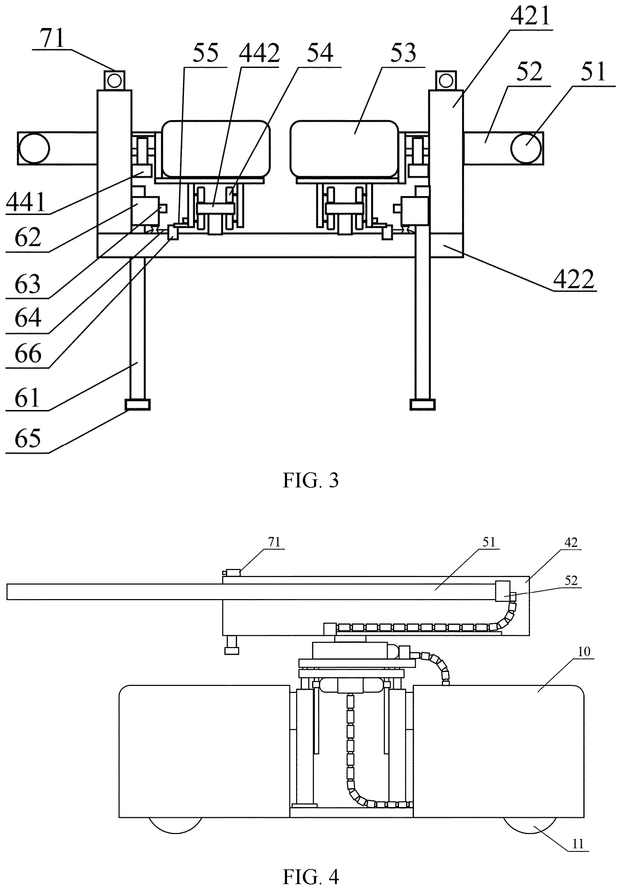

FIG. 3 is a partially enlarged schematic view of the rotary rack and the yarn receiving mechanism in FIG. 2. In a possible implementation, with reference to FIGS. 2 and 3, the doffing device further includes:
an auxiliary supporting mechanism including a limiting sleeve 62, a supporting rod 61, a switch assembly 63, a pull rope 64 and a clamping pin, where the limiting sleeve 62 is arranged at a first end of the rotating mechanism, and a vertical through-hole is formed in the middle of the limiting sleeve 62; the supporting rod 61 is movably arranged in the vertical through-hole, the clamping pin is arranged on a side of the vertical through-hole and is connected to the switch assembly 63, the supporting rod 61 is provided with a ratchet that matches with the clamping pin, and the clamping pin is driven by the switch assembly 63 to separate from or engage with the ratchet of the supporting rod 61; and a first end of the pull rope 64 is connected to a bottom of the supporting rod 61, and a second end of the pull rope 64 is connected to a power source to lift the supporting rod 61.

In the embodiment of the present disclosure, the auxiliary supporting mechanism can support the yarn receiving mechanism when picking up the material 80 to be transferred, thereby avoiding the yarn receiving mechanism from sagging at the farthest end due to the increased weight after receiving the material 80 to be transferred. Such sagging could otherwise affect the pick-up of subsequent materials or cause the received materials to slide off the yarn receiving rod 51 during its retraction.

When the auxiliary supporting mechanism is used, after the rotating mechanism adjusts the orientation of the rotary rack 42 to the second direction, the switch assembly 63 of the auxiliary supporting mechanism enables the clamping pin to be separated from the supporting rod 61. The supporting rod 61 slides to the ground under gravity. The bottom of the supporting rod 61 is provided with the supporting foot 65. The switch assembly 63 re-engages the clamping pin with the ratchet of the supporting rod 61 to ensure that the supporting rod 61 cannot move upward. When the rotating mechanism needs to be adjusted to the first direction again, the switch assembly 63 separates the clamping pin from the supporting rod 61, and the power source retracts the supporting rod 61 by stretching (the pull rope 64).

In a possible implementation, the second end of the pull rope 64 is detachably connected to a hook 55 of the translation assembly through a connecting block 66, and the connecting block 66 is disposed in a sliding chute parallel to the sliding rail assembly. Before the translation assembly extends outwards, the hook 55 is separated from the connecting block 66, allowing the supporting rod 61 to slide down to the ground under gravity. In the inward retraction process of the translation assembly, the hook 55 drives the connecting block 66 to move such that the supporting rod 61 is lifted and retracted.

In the embodiment of the present disclosure, the translation assembly is used as the power source of the auxiliary supporting mechanism. To this end, the sliding chute is provided on the side of the sliding rail assembly close to the auxiliary supporting mechanism. The sliding chute is parallel to the I-beam rail 442, and the connecting block 66 is movably disposed in the sliding chute. The hook 55 and an electric switch are arranged on a side of the wheel seat at the bottom of the translation motor 53. The electric switch can control the hook 55 to pop out or fold inwards. An upper part of the connecting block 66 lies in a moving path of the hook 55. Before the translation assembly extends outward to dock with the target material receiving station, the electric switch folds the hook 55, separating the hook from the connecting block 66 so that the second end of the pull rope 64 is unconstrained. During the inward retraction of the translation assembly, the electric switch pops out the hook 55. As the hook 55 moves, the hook drives the connecting block 66 to move such that the pull rope is pulled to lift and retract the support rod 61.

In a possible implementation, when the doffing device moves towards the target material receiving station, the entire doffing device is located in the ground groove. After the doffing device reaches the target material receiving station, the yarn receiving mechanism is lifted from the ground groove and docks with the target material receiving station, driven by the first lifting mechanism, the second lifting mechanism and the rotating mechanism, to receive the material to be transferred. When the doffing device returns from the target material receiving station, at least a portion of the doffing device is located in the ground groove. When the travelling mechanism 10 of the doffing device moves, the rotary rack 42 is oriented in the first direction parallel to the first straight line.

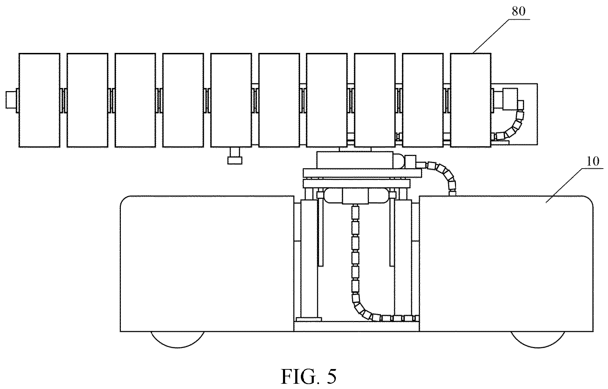

In the embodiment of the present disclosure, the doffing task generally includes three steps: moving to a target material receiving station, docking with the target material receiving station, and returning from the target material receiving station. On the way to the target station and back, the entire doffing device may travel in the ground groove, as shown in FIGS. 4 and 5. It is also possible to keep the material 80 to be transferred above the ground while returning, without submerging or partially submerging. In this way, the device can move more quickly to the next target receiving station to receive the material 80 to be transferred on the next rod.

In a possible implementation, the doffing device, after reaching the target material receiving station, executes the following material receiving operation:
lifting, by the first lifting mechanism and the second lifting mechanism, the yarn receiving mechanism to a height that matches with the target material receiving station; rotating, by the rotating mechanism, the rotary rack 42 to the second direction such that the yarn receiving rod 51 of the yarn receiving mechanism is aligned with the target material receiving station; and extending, by means of the translation assembly, the second end of the yarn receiving rod 51 along the horizontal direction to reach the target material receiving station, where the second direction is a moving direction of the material 80 to be transferred of the target material receiving station.

In the embodiment of the present disclosure, the hydraulic lifting rod of the first lifting mechanism enables the yarn receiving mechanism to quickly approach the height of the target material receiving station, and the second lifting mechanism re-adjusts the height of the yarn receiving mechanism. When the second end of the yarn receiving rod 51 reaches the target material receiving station, if the second end of the yarn receiving rod 51 is not aligned with the target material receiving station, the second lifting mechanism may be used for fine-adjustment.

In a possible implementation, a first end of the rotary rack 42 is provided with a camera device 71, and the camera device 71 is configured to determine a position difference between the second end of the yarn receiving rod 51 and the target material receiving station;
the second lifting mechanism is configured to adjust a vertical position of the second end of the yarn receiving rod 51 according to the position difference; and/or
the rotating mechanism is configured to adjust a transverse position of the second end of the yarn receiving rod 51 according to the position difference to realize accurate docking.

In the embodiment of the present disclosure, the camera device 71 performs image recognition to determine the position difference between the second end of the yarn receiving rod 51 and the target material receiving station. Markers can be set on the second end of the yarn receiving rod 51 and the material receiving station. Any suitable scheme in the related art can be used to calibrate the camera device 71, so that the position difference between the second end of the yarn receiving rod 51 and the target material receiving station may be determined according to image information collected by the camera device 71. The position difference may be decomposed into a transverse position difference and a vertical position difference, and then the second lifting mechanism and the rotating mechanism are used to make the adjustments respectively to achieve accurate docking.

Other components of the doffing device in the above-mentioned embodiments may adopt various technical solutions known to those skilled in the art now and in the future, and will not be described in detail here.

In the description of the present disclosure, it is to be understood that the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, are used based on the orientations and positional relationships shown in the drawings, and are used merely for convenience of describing the present disclosure and simplicity of description, but do not indicate or imply that the device or element referred to must have a particular orientation, be constructed and operated in a particular orientation, and therefore should not be considered as limiting the present disclosure.

Furthermore, the terms "first", "second" are used for descriptive purposes only and are not to be construed as indicating or implying relative importance or implicitly indicating the quantity of technical features indicated. Thus, a feature defined as "first" or "second" may explicitly or implicitly include one or more such features. In the description of the present disclosure, "a plurality of" means two or more unless specifically limited otherwise.

In the present disclosure, unless otherwise explicitly specified and limited, the terms "mounted", "linked", "connected", "fixed" and the like should be constructed broadly, e.g., as meaning of "fixedly connected", "detachably connected", or "integral with"; the connection can be a mechanical, electrical, or communicative connection; the connection can also be "directly connected" or "indirectly connected via an intermediate medium", or the connection can be the internal connection between two components or the interaction relationship between them. A person having ordinary skill in the art may understand the specific meaning of the above-mentioned terms in the present disclosure according to specific situations.

In the present disclosure, unless expressly stated or limited otherwise, the situation of a first feature being "on" or "under" a second feature may include the first and second features being in direct contact, and may also include the situation where the first and second features are not in direct contact but are in contact via another feature between them. Also, the first feature being "on", "above" and "over" the second feature may include the first feature being directly above and obliquely above the second feature, or simply indicating that the first feature is at a higher level than the second feature. The first feature being "under", "beneath" and "below" the second feature includes the first feature being directly below and obliquely below the second feature, or simply meaning that the first feature is at a lower level than the second feature.

The above disclosure provides many different embodiments or examples for implementing different structures of the present disclosure. In order to simplify the present disclosure, specific example components and arrangements are described above. Of course, they are merely examples and are not intended to limit the present disclosure. Moreover, the present disclosure may repeat reference numerals and/or reference letters in the various examples for purposes of simplicity and clarity and do not in themselves dictate a relationship between the various embodiments and/or arrangements discussed.

The above is merely a description of the specific embodiments of the present disclosure, but the scope of protection of the present disclosure is not limited thereto. A person skilled in the art may readily conceive of various changes or substitutions within the technical scope disclosed in the present disclosure, and all such changes and substitutions should be encompassed within the scope of protection of the present disclosure. Therefore, the scope of protection of the present disclosure should be determined by the scope of protection of the claims.

## Claims

1. A periscopic doffing device, **characterized by** comprising:
a travelling mechanism (10) including a frame (12), traveling wheels (11) and a traveling motor, wherein the travelling mechanism (10) is disposed in a ground groove below the ground, the ground groove is arranged along a first straight line, and the first straight line is parallel to a second straight line formed by a plurality of material receiving stations;
a first lifting mechanism including a first lifting rod group (21), a first driving motor and a first platform (22), wherein the first lifting rod group (21) is fixed on the frame (12), a top end of the first lifting rod group (21) is connected to the first platform (22), and the first lifting rod group (21) is driven by the first driving motor to adjust a height of the first platform (22);
a second lifting mechanism including a second lifting rod group, a second driving motor (34) and a second platform (33), wherein the second lifting rod group is arranged on the first platform (22), a top end of the second lifting rod group is connected to the second platform (33), and the second lifting rod group is driven by the second driving motor (34) to adjust a height of the second platform (33);
a rotating mechanism including a rotary motor (41) fixed on the second platform (33) and a rotary rack (42), wherein the rotary motor (41) is connected to a rotary table (43) at a bottom of the rotary rack (42), a sliding rail assembly is horizontally arranged on the rotary rack (42), and the rotary rack (42) is driven by the rotary motor (41) to switch an orientation between a first direction and a second direction; and
a yarn receiving mechanism including a yarn receiving rod (51) and a translation assembly, wherein a first end of the yarn receiving rod (51) is connected to the translation assembly, the translation assembly is connected to the sliding rail assembly, and the yarn receiving rod (51) is driven by the translation assembly to extend and retract along the orientation of the rotary rack (42), such that a second end of the yarn receiving rod (51) reaches a target material receiving station to receive a material to be transferred.

2. The periscopic doffing device of claim 1, wherein the first lifting rod group (21) comprises a plurality of hydraulic lifting rods, bottoms of the plurality of hydraulic lifting rods are fixed to the middle of the frame (12), and top ends of the plurality of hydraulic lifting rods are uniformly distributed along the edge of the first platform (22).

3. The periscopic doffing device of claim 1, wherein the second lifting rod group comprises a plurality of sets of threaded screws and sliding rods, wherein the sliding rods are fixedly connected to one of the first platform (22) and the second platform (33) and are slidingly connected to the other; bottoms of the threaded screws penetrate through the first platform (22) and are connected to a second driving motor (34) located under the first platform (22); and the second driving motor (34) drives the threaded screw to rotate to lift or lower the second platform (33).

4. The periscopic doffing device of claim 1, wherein a pair of vertical plates (421) are provided on both sides in a length direction of the rotating mechanism, and bottoms of the pair of vertical plates (421) are connected to the rotary table (43) through a bottom plate (422); and the vertical plate (421) is provided with a slot arranged along the horizontal direction, the sliding rail assembly is fixed to the inner side of the vertical plate (421) below the slot, the translation assembly is arranged between the pair of vertical plates (421), a translation motor (53) of the translation assembly is connected to the sliding rail assembly, and a sliding block (52) of the translation assembly is connected to a first end of the yarn receiving rod (51) outside the vertical plate (421) through the slot.

5. The periscopic doffing device of claim 4, wherein the sliding rail assembly comprises a rack rail (441) and an I-beam rail (442), the I-beam rail (442) is fixed on the bottom plate (422), and the rack rail (441) is fixed to an inner side of the vertical plate (421); and a bottom of the translation motor (53) is connected to the I-beam rail (442) through a wheel (54), an output end of the translation motor (53) is connected to the rack rail (441) through a gear, and the sliding block (52) is connected to the translation motor (53).

6. The periscopic doffing device of claim 1, further comprising:
an auxiliary supporting mechanism including a limiting sleeve (62), a supporting rod (61), a switch assembly (63), a pull rope (64) and a clamping pin, wherein the limiting sleeve (62) is arranged at a first end of the rotating mechanism, a vertical through-hole is formed in the middle of the limiting sleeve (62), the supporting rod (61) is movably arranged in the vertical through-hole, the clamping pin is arranged on a side of the vertical through-hole and connected to the switch assembly (63), the supporting rod (61) is provided with a ratchet that matches with the clamping pin, and the clamping pin is driven by the switch assembly (63) to separate from or engage with the ratchet of the supporting rod (61); and a first end of the pull rope (64) is connected to a bottom of the supporting rod (61), and a second end of the pull rope (64) is connected to a power source to lift the support rod (61).

7. The periscopic doffing device of claim 6, wherein the second end of the pull rope (64) is detachably connected to a hook (55) of the translation assembly through a connecting block (66), and the connecting block (66) is disposed in a sliding chute parallel to the sliding rail assembly; before the translation assembly extends outwards, the hook (55) is separated from the connecting block (66), allowing the supporting rod (61) to slide down to the ground under gravity; and in the inward retraction process of the translation assembly, the hook (55) drives the connecting block (66) to move such that the supporting rod (61) is lifted and retracted.

8. The periscopic doffing device of any one of claims 1 to 7, wherein in a case of the doffing device moves towards the target material receiving station, the entire doffing device is located in the ground groove; after the doffing device reaches the target material receiving station, the yarn receiving mechanism is lifted from the ground groove and docks with the target material receiving station, driven by the first lifting mechanism, the second lifting mechanism and the rotating mechanism, to receive the material to be transferred; in a case of the doffing device returns from the target material receiving station, at least a portion of the doffing device is located in the ground groove; and in a case of the travelling mechanism (10) of the doffing device moves, the rotary rack (42) is oriented in the first direction parallel to the first straight line.

9. The periscopic doffing device of claim 8, wherein the doffing device, after reaching the target material receiving station, executes the following material receiving operation:
lifting, by the first lifting mechanism and the second lifting mechanism, the yarn receiving mechanism to a height matched with the target material receiving station and rotating, by the rotating mechanism, the rotary rack (42) to the second direction; and extending, by means of the translation assembly, the second end of the yarn receiving rod (51) along the horizontal direction to reach the target material receiving station, wherein the second direction is a moving direction of the material (80) to be transferred of the target material receiving station.

10. The periscopic doffing device of claim 1, wherein a first end of the rotary rack (42) is provided with a camera device (71), and the camera device (71) is configured to determine a position difference between the second end of the yarn receiving rod (51) and the target material receiving station;
the second lifting mechanism is configured to adjust a vertical position of the second end of the yarn receiving rod (51) according to the position difference; and/or
the rotating mechanism is configured to adjust a transverse position of the second end of the yarn receiving rod (51) according to the position difference to realize accurate docking.
